# EUROPEAN PATENT APPLICATION

(11) **EP 4 621 924 A1**
(43) Date of publication of application: **24.09.2025**
(21) Application number: 24223609.9
(22) Date of filing: 30.12.2024
(51) Int. Cl.: H01M 10/42, H01M 50/284, H01M 50/287, H01M 50/202, H01M 50/588, H01M 50/595

(54) **BATTERY PACK**

(30) Priority: 19.03.2024 KR 20240037605
(71) Applicant: SAMSUNG SDI CO., LTD., Yongin-si, Gyeonggi-do 17084 (KR)
(72) Inventor: Choi, Jae Hyuk, 17084 Yongin-si, Gyeonggi-do (KR); Hur, Sang Do, 17084 Yongin-si, Gyeonggi-do (KR); Cho, Hyun, 17084 Yongin-si, Gyeonggi-do (KR)
(74) Representative: Gulde & Partner

(57) **Abstract**

A battery pack includes: a battery cell including an electrode assembly, and an exterior material having a room portion accommodating the electrode assembly therein and a terrace portion from which an electrode tab electrically connected to the electrode assembly protrudes; a protection circuit module electrically connected to the battery cell and seated on the terrace portion; and an insulating portion between the protection circuit module and the terrace portion and between the room portion and the protection circuit module.

## Description

### BACKGROUND

### 1. Field

Aspects of some embodiments of the present disclosure relate to a battery pack.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The secondary battery may include an electrode assembly including a positive electrode plate, a separator, and a negative electrode plate, and an exterior material that accommodates the electrode assembly. The exterior material may be divided into a circular type, a prismatic type, a pouch type, and the like according to the shape thereof.

A pouch-type secondary battery includes a laminate pouch that may be relatively easy to deform into various shapes and has a small weight, and may further include a protection circuit module mounted on one side of the laminate pouch to control charging and discharging of the battery.

The above information disclosed in this Background section is for enhancement of understanding of the background of the present disclosure, and therefore, it may contain information that does not constitute related (or prior) art.

### SUMMARY

Aspects of some embodiments of the present disclosure include a battery pack that may be capable of relatively increasing a size of a cell room and relatively increasing capacity by reducing a thickness of a tape applied to the cell room and a terrace, and being slimmed down overall by reducing a thickness of a tape on a protection circuit module side.

Aspects of some embodiments of the present disclosure include a battery pack that may be capable of mitigating the risk of a short circuit of an electrode assembly by preventing or reducing instances of a cell room being pressed during a drop impact, regardless of the structure of the electrode assembly.

These and other aspects and features of the present disclosure will be described in or will be apparent from the following description of embodiments of the present disclosure.

According the present disclosure, there is provided a battery pack including a battery cell including an electrode assembly, and an exterior material having a room portion accommodating the electrode assembly therein and a terrace portion from which a negative electrode cell tab and a positive electrode cell tab, which are electrically connected to the electrode assembly, protrude, a protection circuit module electrically connected to the battery cell and seated on the terrace portion, and an insulating portion located between the protection circuit module and the terrace portion and located between the room portion and the protection circuit module.

According to some embodiments, the insulating portion may include a first region interposed between the protection circuit module and the terrace portion and arranged in parallel with the terrace portion, and a second region connected to the first region at an angle and interposed between the room portion and the protection circuit module.

According to some embodiments, the insulating portion may include an insulating sheet provided in each of the first region and the second region, or in the second region, and an adhesive member provided on at least one surface of a first surface of the insulating sheet and a second surface facing the first surface. Preferably, an end of the insulating portion in the first region protrudes further than an end of the terrace portion.

According to some embodiments, the insulating portion may further include a double-sided tape attached to at least one surface of the first surface of the insulating sheet and the second surface of the insulating sheet, and/or to one surface of the adhesive member, to fix the insulating sheet and/or the adhesive member.

According to some embodiments, the first region and the second region may be at least partially connected to each other.

According to some embodiments, the insulating sheet may be provided in the second region, and the adhesive member may be attached to the first surface of the insulating sheet provided in the second region, and may extend to the first region.

According to some embodiments, the double-sided tape may be attached to one surface of the adhesive member of the first region extending from the second region.

According to some embodiments, the insulating sheet may be divided into two separate insulating sheets and provided in the first region and the second region, respectively, the adhesive member may be integrally bent and attached to the second surface of each of the insulating sheet of the first region and the insulating sheet of the second region.

According to some embodiments, the double-sided tape may be divided into separate double-sided tapes and attached to the first surfaces of the insulating sheets, respectively, corresponding to each separated insulating sheet.

According to some embodiments, the insulating sheet may be provided in each of the first region and the second region, and the double-sided tape may be attached to each of the first surface and the second surface of the insulating sheet.

According to some embodiments, the insulating sheet provided in the first region and the insulating sheet provided in the second region may be incised in a dot shape.

According to some embodiments, the double-sided tape on the first surface of the insulating sheet may be incised to correspond to the dot shape of the insulating sheet.

According to some embodiments, a notch structure where at least one side is connected may be formed between the insulating sheet provided in the first region and the insulating sheet provided in the second region.

According to some embodiments, the double-sided tape on the first surface and the second surface of the insulating sheet may have a notch structure corresponding to the notch structure of the insulating sheet.

According to some embodiments, the insulating sheet may be formed of a polycarbonate (PC) material.

According to some embodiments, an outer side end of the insulating portion provided in the second region may be located on the same line as or lower than an upper side of the room portion.

According to some embodiments, an end of the insulating portion provided in the first region may protrude further than an end of the terrace portion.

According to some embodiments, the battery pack may further include a protective member surrounding one surface of the terrace portion and at least one surface of the protection circuit module.

According to some embodiments, the protection circuit module may further include a connector for electrically connecting the battery pack and an external device.

According to some embodiments, the protection circuit module may be seated such that a charging and discharging protection device mounted on the protection circuit module faces the terrace portion.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is an exploded perspective view illustrating a battery pack according to some embodiments of the present disclosure;
FIG. 2 is a partial cross-sectional view of a side surface of the battery pack according to some embodiments of the present disclosure;
FIGS. 3 to 6 are each a set of front and side cross-sectional views of an insulating portion before bending according to some embodiments of the present disclosure;
FIG. 7 is a schematic view illustrating a smartphone equipped with a secondary battery according to some embodiments of the present disclosure;
FIGS. 8A and 8B are perspective views of a battery pack according to some embodiments of the present disclosure; and
FIGS. 9A and 9B show examples of vehicle bodies and body parts to which one or more embodiments of the present disclosure may be applied.

### DETAILED DESCRIPTION

Hereinafter, aspects of some embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In general, information Technology (IT) and small pouch-type battery packs may have a structure in which components of a battery control circuit such as a protection circuit module (PCM), a protection module package (PMP), and a battery monitoring system (BMS) are placed on a cell terrace. In addition, in order to place a battery control circuit board on the cell terrace, a tape or the like is attached to a cell terrace side and a cell room side for the purpose of insulation, drop impact reduction, and the like. When the tape is not attached, there is a high probability that a pouch will rust due to electrical conduction, and a pouch cell will be stabbed or torn due to the impact of the drop, resulting in a hard short circuit, which may cause an event situation such as a fire. For the tape attached to prevent this, Poron^{®} made of a polyurethane (foam) material, rubber made of a silicone material, and the like may be used for insulation and impact reduction, and in some cases, a tape made of polyethylene terephthalate (PET), polyimide (PI), or Nomex may also be attached to the cell together for the additional insulation.

However, the tape made of a Poron^{®} material and a rubber material has a form that absorbs a drop impact due to the nature of the material when the impact is applied, and when an excessive impact is applied locally, components of a battery control circuit may press against a room portion, which may affect the electrode assembly and cause a short circuit. Accordingly, according to some embodiments, a polycarbonate (PC) material may be applied to an insulating portion, and the insulating portion is interposed on an entire surface of the room portion, so that an impact can be distributed over a large area, and due to the nature of the material, the electrode assembly may not be affected even when an excessive impact is applied to a localized area.

In addition, due to the manufacturing process, it may not be possible to make Poron^{®} and rubber tapes smaller in thickness than 0.2 mm, and it may also not be possible to greatly increase the thickness of the tape. However, according to some embodiments, by applying a PC material to the insulating portion, the thickness of the tape can be freely adjusted as desired by a designer starting from 0.1 mm, so that the region of the room portion can be expanded and energy density (ED) can be relatively increased.

In addition, the rubber and the Poron^{®} have a flame retardant rating of HF according to a Horizontal Burning Foam Material Test, which does not meet the current International Electrotechnical Commission (IEC) international standard for IT, which requires a flame retardant rating of V-0, and thus, an additional tape made of a material with a flame retardant of V-0 needs to be applied to the room portion side to cover the components of the battery control circuit and the tape on the terrace side. According to some embodiments, a PC material is applied to the insulating portion, and the PC material has a flame retardant rating of V-0, and thus the tape (a protective member), which is required to be additionally attached, only needs to cover the components of the battery control circuitry and does not need to be attached to the room portion side. Accordingly, the degree of pack design freedom can be relatively increased and thus a thickness of the cell can be relatively increased to the extent that the tape is not attached to the room portion side, which can improve ED.

In addition, in the case of the conventional tape, in order to reduce the height of the protection circuit module side, it is necessary to attach Poron^{®} or rubber to the room portion side, and to additionally attach an insulating tape made of PET, PI, Nomex, or the like to the terrace portion side. According to some embodiments, the height of the protection circuit module side can be reduced by applying a PC material to the insulating portion and, if necessary, attaching a PC material insulating sheet only to the room portion side and attaching an adhesive member only to the terrace portion side. Since a flexible printed circuit board (FPCB) of a set or a pack traverses relevant parts of the protection circuit module, the lower the height of the relevant parts can play a key role in slimming down the set, such as an IT device.

Hereinafter, such a structure according to some embodiments will be described in more detail.

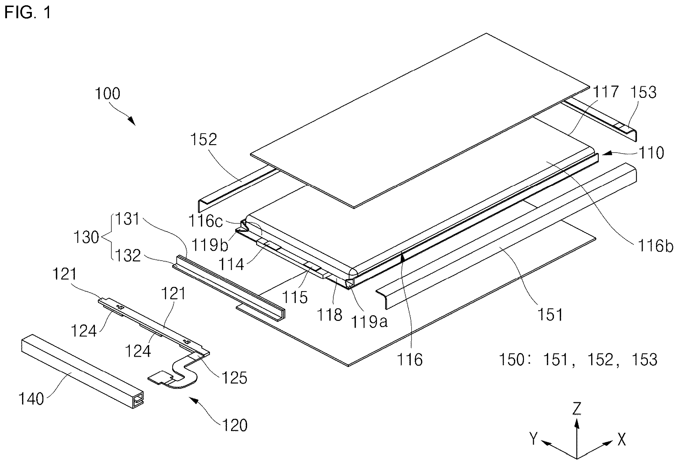

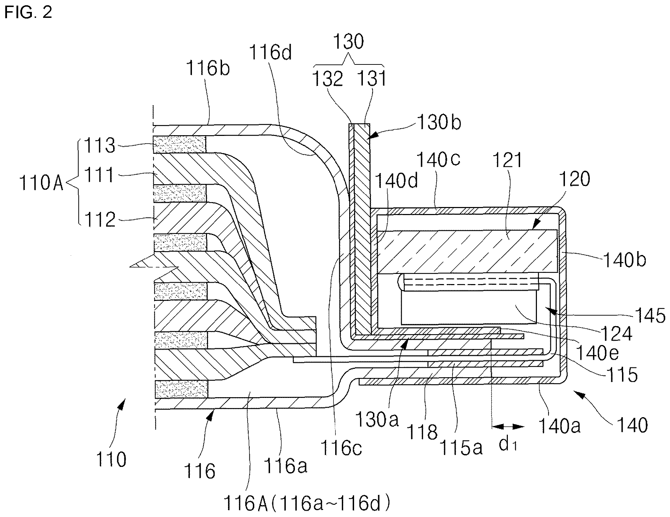

FIG. 1 is an exploded perspective view illustrating a battery pack 100 according to some embodiments of the present disclosure. FIG. 2 is a partial cross-sectional view of a side surface of the battery pack 100 according to some embodiments of the present disclosure.

Referring to FIGS. 1 and 2, the battery pack 100 according to some embodiments may include a battery cell 110, a protection circuit module 120, and an insulating portion 130. According to some embodiments, the battery pack 100 may further include a protective member 140 and/or a cover 150.

The battery cell 110 may include an electrode assembly 110A (see FIG. 2), a positive electrode cell tab 114, a negative electrode cell tab 115, and an exterior material 116. The positive electrode cell tab 114 may extend to the outside of the exterior material 116 while being connected to a first electrode plate 111 of the electrode assembly 110A, and the negative electrode cell tab 115 may extend to the outside of the exterior material 116 while being connected to a second electrode plate 112 of the electrode assembly 110A. The positive electrode cell tab 114 and the negative electrode cell tab 115 may each be surrounded by an insulating and adhesive tab tape 115a to relatively improve sealability with the exterior material 116 and to provide electrical insulation from the exterior material 116.

The exterior material 116 may include a first exterior portion 116a, a second exterior portion 116b, a third exterior portion 116c, fourth exterior portions 118, a fifth exterior portion 117, and perimeter sealing portions 119a and 119b, and the positive electrode cell tab 114 and the negative electrode cell tab 115 may extend toward the outer side of the battery cell 110 through the fourth exterior portions 118. According to some embodiments, the fourth exterior portions 118 may include or be referred to as a terrace portion. Hereinafter, the fourth exterior portion 118 is referred to as a terrace portion 118.

According to some embodiments, the battery cell 110 includes the electrode assembly 110A to which the cell tabs 114 and 115 are connected, and the electrode assembly 110A may include the first electrode plate 111, the second electrode plate 112, and a separator 113 interposed therebetween. According to some embodiments, the first electrode plate 111 may be a positive electrode plate, the second electrode plate 112 may be a negative electrode plate, and vice versa. According to some embodiments, the electrode assembly 110A may be surrounded by the exterior material 116. According to some embodiments, a liquid electrolyte, a gel electrolyte, or a solid electrolyte may be accommodated inside the exterior material 116.

As the positive electrode active material, a compound capable of reversibly intercalating/deintercalating lithium (e.g., a lithiated intercalation compound) may be used. For example, at least one of a composite oxide of lithium or a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b ≤0.5, 0≤c≤0.5, 0<α<2); LiaNi_{1-b-c}Mn_{b}X_{c}O_{2-α}D_{α}(0.90≤a≤1.8, 0≤b≤0.5, 0≤c≤0.5, 0≤α <2); LiaNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.9≤a≤1.8, 0.001≤b≤0.1); L₁ₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤ 1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer located on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

According to some embodiments, the electrode assembly 110A may be accommodated in the exterior material 116 in a form that is surrounded by the first exterior portion 116a, the second exterior portion 116b, the third exterior portion 116c, and the fourth exterior portion 118. That is, the battery pack 100 may include a room portion 116A in which the electrode assembly 110A is accommodated, and the terrace portion 118 from which the electrode tabs 114 and 115 electrically connected to the electrode assembly 110A protrude. Hereinafter, the inside of the exterior material 116 in which the electrode assembly 110A is accommodated is referred to as the room portion 116A.

The exterior material 116 protects the electrode assembly 110A from an external environment, and to this end, in addition to the perimeter sealing portions 119a and 119b, the fourth exterior portions 118 may also be sealed. According to some embodiments, the fourth exterior portion 118 may also include a region that is generally sealed from the first exterior portion 116a. According to some embodiments, the fourth exterior portions 118 may refer to a region that is sealed after extending forward from the third exterior portion 116c and a region that is sealed after extending forward from the first exterior portion 116a.

According to some embodiments, the exterior material 116 may include or be referred to as a laminate exterior material formed by providing an insulating layer on each of upper and lower surfaces of a central metal thin-film. According to some embodiments, the first exterior portion 116a may be located below the electrode assembly 110A, and the second exterior portion 116b may be located above the electrode assembly 110A, i.e., above the first exterior portion 116a. In addition, the third exterior portion 116c may be located on a front side of the second exterior portion 116b.

According to some embodiments, the fourth exterior portions are referred to as the terrace portions 118 as described above, and may extend respectively from the third exterior portion 116c and the first exterior portion 116a, and the positive electrode cell tab 114 and the negative electrode cell tab 115 may pass the fourth exterior portions. According to some embodiments, the plane of the terrace portion 118 may be generally parallel to the plane of the first exterior portion 116a and/or the plane of the second exterior portion 116b, while being generally perpendicular to the plane of the third exterior portion 116c. According to some embodiments, a curved portion 116d may be further provided between the second exterior portion 116b and the third exterior portion 116c. According to some embodiments, the perimeter sealing portions 119a and 119b may extend to both sides of the terrace portion 118 and may be folded in an upward direction.

According to some embodiments, the protection circuit module 120 may be seated on the battery cell 110. According to some embodiments, the protection circuit module 120 may be seated on the terrace portion 118 of the battery cell 110. The protection circuit module 120 may include a printed circuit board 121 having a circuit pattern, a positive electrode welding tab to which the positive electrode cell tab 114 is inserted or seated and welded, a negative electrode welding tab to which the negative electrode cell tab 115 is inserted or seated and welded, and charging and discharging protection devices (e.g., an integrated circuit, a switching element, a resistance element, a sensor, and the like) 124, and a connector 125.

The protection circuit module 120 may monitor a charge and discharge voltage, a charge and discharge current, and/or a temperature of the battery cell 110 to protect the battery cell 110 from overcharging and overdischarging. The connector 125 may be connected to an external electronic device so that the battery cell 110 can be charged or discharged. According to some embodiments, the connector 125 of the protection circuit module 120 may extend in a longitudinal direction of the printed circuit board 121. According to some embodiments, the connector 125 may be bent in various forms and then electrically connected to the electronic device.

According to some embodiments, the insulating portion 130 may be located between the protection circuit module 120 and the terrace portion 118 and between the room portion 116A and the protection circuit module 120. According to some embodiments, the insulating portion 130 may include a first region 130a interposed between the protection circuit module 120 and the terrace portion 118 and arranged parallel to the terrace portion 118, and a second region 130b connected to the first region 130a at an angle (e.g., between about 60 degrees and about 120 degrees) and interposed between the room portion 116A and the protection circuit module 120.

According to some embodiments, the insulating portion 130 may be provided in an approximately "L" shape. In addition, according to some embodiments, the insulating portion 130 may include the first and second regions 130a and 130b, an insulating sheet 131 provided in the first region 130a or the second region 130b, and an adhesive member 132 provided on at least one surface of a first surface of the insulating sheet 131 and a second surface facing the first surface. A detailed description of the insulating portion 130 will be described later.

According to some embodiments, the protective member 140 may surround the terrace portion 118 and the protection circuit module 120 to insulate the protection circuit module 120 from an external environment as well as protect the battery cell 110 from an external impact. According to some embodiments, the protective member 140 may cover one surface of the terrace portion 118 and at least one surface of the protection circuit module 120.

Referring to FIG. 2, the protective member 140 may be bent at least four times and may extend from a lower surface of the terrace portion 118 to an upper surface of the terrace portion 118. The protective member 140 may be located on the lower surface of the terrace portion 118, a side surface of the protection circuit module 120, an upper portion of the protection circuit module 120, and a front surface of the room portion 116A between the protection circuit module 120 and the insulating portion 130 to surround the terrace portion 118 and the protection circuit module 120. According to some embodiments, the protective member 140 may have a hole such that the printed circuit board passes therethrough. According to some embodiments, the protective member 140 may include a first region 140a attached to the lower surface of the terrace portion 118, and a second region 140b extending from the first region 140a and located on one side surface of the protection circuit module 120 so as to be parallel to the insulating portion 130. In addition, the protective member 140 may include a third region 140c extending from the second region 140b and located on an upper side of the protection circuit module 120 to be parallel to the second exterior portion 116b, and a fourth region 140d extending from the third region 140c and located between the insulating portion 130 and the other side surface of the protection circuit module 120. In addition, the protective member 140 may include a fifth region 140e extending from the fourth region 140d and located between the terrace portion 118 and a lower side of the protection circuit module 120. The fifth region 140e may be located on an upper surface of the first region 130a of the insulating portion 130 that is interposed on the upper surface of the terrace portion 118.

According to some embodiments, the protection circuit module 120 may be accommodated in a cavity 135 provided between the third region 140c and the fifth region 140e of the protective member 140, and between the second region 140b and the fourth region 140d of the protective member 140. The cavity 135 may have a horizontal width and a vertical width capable of sufficiently accommodating the protection circuit module 120 including the printed circuit board 121 and the charging and discharging protection device 124.

Thus, by covering the protection circuit module 120 and the cell tabs 114 and 115, the protective member 140 can secure the insulation of the protection circuit module 120, as well as the insulation of the cell tabs 114 and 115. In addition, the conventional protective member 140 is arranged to extend from the terrace portion 118 to an upper surface of the battery cell 110 (to the second exterior portion) and thus has a limitation in slimming down an overall size thereof. However, according to some embodiments, the upper surface (the second exterior portion) of the battery cell 110 is not covered by the protective member 140, thereby enabling a slimmer structure.

The cover 150 may include side portion covers 151 and 152 that cover and protect a side perimeter of the battery cell 110, and a rear side cover 153 that covers and protects a rear perimeter of the battery cell 110. According to some embodiments, the side portion covers 151 and 152 may surround the perimeter sealing portions 119a and 119b of the battery cell 110, respectively, and the rear side cover 153 may surround the fifth exterior portion 117 of the battery cell 110, so that the battery cell 110 may be protected from an external impact by the side portion covers 151 and 152 and the rear side cover 153.

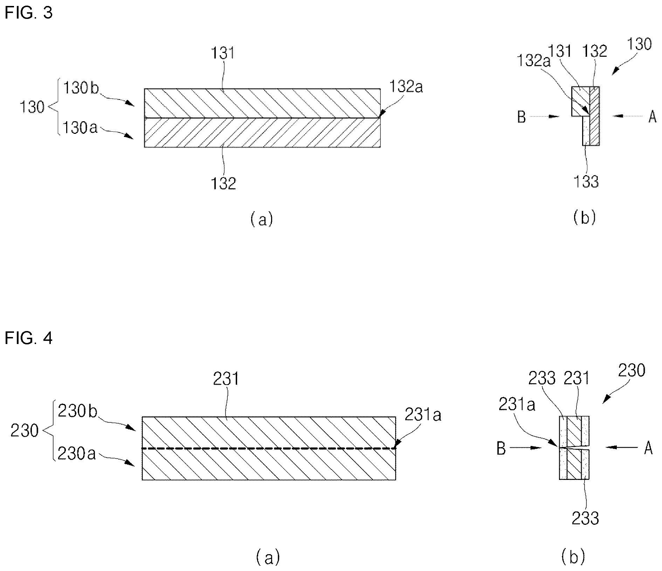

FIGS. 3 to 6 are each a set of front and side cross-sectional views of the insulating portion 130 before bending according to various embodiments of the present disclosure. Hereinafter, various embodiments of the insulating portion 130 will be described with reference to FIGS. 3 to 6.

The insulating portion 130 may be interposed on the terrace portion 118 and the third exterior portion 116c of the exterior material 116. According to some embodiments, the insulating portion 130 may be provided with an insulation material including polycarbonate (PC). However, the present disclosure is not limited thereto, and the insulating portion 130 may be provided with an insulation material that can be as thin as a set thickness and still be rigid, such as polyimide (PI), polypropylene (PP), or polyethylene (PE).

According to some embodiments, the first region 130a of the insulating portion 130 may be located on the terrace portion 118 of the exterior material 116, and the second region 130b of the insulating portion 130 may be located on the third exterior portion 116c of the exterior material 116. According to some embodiments, an end of the second region 130b of the insulating portion 130 may be located on the same line as or lower than the second exterior portion 116b of the exterior material 116. According to some embodiments, a height of the second region 130b of the insulating portion 130 may be less than or equal to a height of the third exterior portion 116c. According to some embodiments, the height of the third exterior portion 116c may mean the height to the top of the curved portion 116d connected to the second exterior portion 116b. That is, the second region 130b of the insulating portion 130 may not protrude further than the second exterior portion 116b. According to some embodiments, the insulating portion 130 may be attached to the room portion 116A as much as possible while not protruding further than the exterior material 116.

In addition, according to some embodiments, a length d1 between an end of the first region 130a of the insulating portion 130 and an end of the terrace portion 118 may be greater than or equal to 1 mm. That is, the end of the first region 130a of the insulating portion 130 may protrude further than the end of the terrace portion 118.

According to some embodiments, the insulating portion 130 may further include a double-sided tape 133 attached to at least one surface of a first surface A and a second surface B of the insulating sheet 131 and/or one surface of the adhesive member 132 to fix the insulating sheet 131 and/or the adhesive member 132. Here, the first surface A may refer to a surface in contact with the room portion 116A and the terrace portion 118 when assembled, and the second surface B may refer to an opposite surface of the first surface A.

FIG. 3A is a front cross-sectional view of the insulating portion 130 that is not bent before attaching the double-sided tape 133, and illustrates the second surface B in a state in which the double-sided tape 133 is not attached. FIG. 3B is a side cross-sectional view of the insulating portion 130 that is not bent after the double-sided tape 133 is attached, and in the drawing, the left side may be the second surface B and the right side may be the first surface A. Depending on the embodiment, the directions may be reversed during assembly.

Referring to FIG. 3, the insulating sheet 131 may be provided in the second region 130b of the insulating portion 130. In addition, the adhesive member 132 may be attached to the first surface A of the insulating sheet 131 provided in the second region 130b of the insulating portion 130, and may extend to the first region 130a. The insulating portion 130 may be bent at a bent portion 132a between the first region 130a and the second region 130b during assembly of the battery cell 110. At this point, the adhesive member 132 may be bent in an approximately "L" shape. In addition, according to some embodiments, the double-sided tape 133 may be attached to one surface of the adhesive member 132 (at the second surface side) in the first region 130a. In this case, according to some embodiments, the double-sided tape 133 may also be attached to at least a portion of the second surface of the insulating sheet 131. Such a structure of FIG. 3 is illustrated in FIG. 2, and in this structure, the insulating sheet 131 is not provided in the first region 130a on the side of the terrace portion 118, thereby reducing a height of the protection circuit module 120 side. According to some embodiments, the insulating sheet 131 may have a thickness of about 0.10 mm to about 0.20 mm, the adhesive member 132 may have a thickness of about 0.05 mm, and the double-sided tape 133 may have a thickness of about 0.05 mm. In addition, the insulating sheet 131 may be formed of a PC material, and the adhesive member 132 may be formed of a PET material.

FIG. 4A is a front cross-sectional view of an insulating portion 230 that is not bent before attaching a double-sided tape 233, and illustrates a first surface A in a state in which the double-sided tape 233 is not attached. FIG. 4B is a side cross-sectional view of the insulating portion 230 that is not bent after the double-sided tape 233 is attached, and in the drawing, the left side may be a second surface B and the right side may be a first surface A. Depending on the embodiment, the directions may be reversed during assembly.

Referring to FIG. 4, insulating sheets 231 provided in a first region 230a and a second region 230b may be incised in a dot shape. Accordingly, a material that may not be easily bent can be more easily bent. In this case, the double-sided tape 233 may be attached to the first surface A and the second surface B of the insulating sheet 231. According to some embodiments, the double-sided tape 233 of the first surface A of the insulating sheet 231 may be incised to correspond to the dot shape of the insulating sheet 231. The insulating portion 230 may be bent at a bent portion 231a between the first region 230a and the second region 230b during assembly of the battery cell 110. In this case, the insulating sheet 231 and the double-sided tape 233 of the second surface B may be bent in an approximately "L" shape. According to some embodiments, the insulating sheet 231 may have a thickness of about 0.10 mm to about 0.20 mm, and the double-sided tape 233 may have a thickness of about 0.05 mm. In addition, the insulating sheet 231 may be formed of a polycarbonate (PC) material.

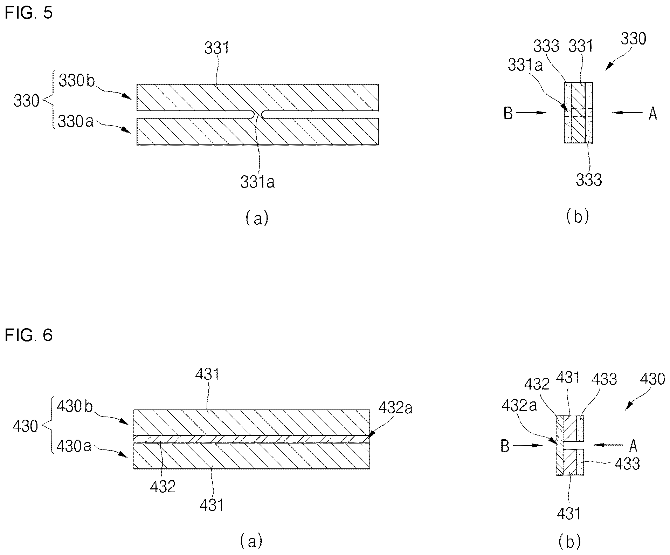

FIG. 5A is a front cross-sectional view of an insulating portion 330 that is not bent before attaching a double-sided tape 333, and illustrates a first surface A or a second surface B in a state in which the double-sided tape 333 is not attached. FIG. 5B is a side cross-sectional view of the insulating portion 330 that is not bent after the double-sided tape 333 is attached, and in the drawing, the left side may be a second surface B and the right side may be the first surface A. Depending on the embodiment, the directions may be reversed during assembly.

Referring to FIG. 5, a notch structure where at least one side is connected may be formed between insulating sheets 331 provided in a first region 330a and in a second region 330b. Accordingly, a material that may not be easily bent can be more easily bent. In this case, the double-sided tape 333 may be attached to the first and second surfaces A and B of the insulating sheet 331. The double-sided tape 333 on the first surface A and the second surface B of the insulating sheet 331 have a notch structure corresponding to the notch structure of the insulating sheet 331. The insulating portion 330 may be bent at a bent portion 331a between the first region 330a and the second region 330b during assembly of the battery cell 110. In this case, the insulating sheet 331 and the double-sided tape 333 of the first surface A or the second surface B may be bent in an approximately "L" shape. According to some embodiments, the insulating sheet 331 may have a thickness of about 0.10 mm to about 0.20 mm, and the double-sided tape 333 may have a thickness of about 0.05 mm. In addition, the insulating sheet 331 may be formed of a PC material.

FIG. 6A is a front cross-sectional view of an insulating portion 430 that is not bent before attaching a double-sided tape 433, and illustrates a first surface A in a state in which the double-sided tape 433 is not attached. FIG. 6B is a side cross-sectional view of the insulating portion 430 that is not bent after the double-sided tape 433 is attached, and in the drawing, the left side may be a second surface B and the right side may be the first surface A. Depending on the embodiment, the directions may be reversed during assembly.

Referring to FIG. 6, insulating sheets 431 may be separated and spaced apart and provided in the first region 430a and the second region 430b, respectively. The adhesive member 432 may be integrally bent and attached to the second surface B of each of the insulating sheet 431 of the first region 430a and the insulating sheet 431 of the second region 430b. Accordingly, a material that may not be easily bent can be more easily bent. According to some embodiments, the double-sided tape 433 may be separately attached to each of the first surfaces of the insulating sheets 431, corresponding to each of the separated insulating sheets 431. The insulating portion 430 may be bent at a bent portion 432a between the first region 430a and the second region 430b during assembly of the battery cell 110. At this point, the adhesive member 432 may be bent in an approximately "L" shape. According to some embodiments, the insulating sheet 431 may have a thickness of about 0.10 mm to about 0.20 mm, the adhesive member 432 may have a thickness of about 0.05 mm, and the double-sided tape 433 may have a thickness of about 0.05 mm. In addition, the insulating sheet 431 may be formed of a PC material, and the adhesive member 432 may be formed of a PET material.

As described above, according to various embodiments of the present disclosure, a pack structure can be simplified by eliminating the need to attach additional tapes made of polyethylene terephthalate (PET), polyimide (PI), polypropylene (PP), and the like by applying the insulating portion 130 made of a polycarbonate (PC) material to replace the insulating portion made of a polyurethane foam (e.g. Poron^{®}) or rubber material applied to the room portion 116A and the terrace portion 118 of IT and small pouch-type battery packs. In addition, since the thickness can be reduced compared to the conventional insulating portion, a size of the room portion 116A can be expanded and cell ED can be relatively increased to the extent the size is expanded. In addition, regardless of an electrode assembly structure (winding, stack, or the like) of the pouch cell, the risk of shorting the electrode assembly can be suppressed by preventing the room portion 116A from being pressed during a drop impact. In addition, a slimmer structure is possible by reducing the height of the protection circuit module 120 and eliminating the need to attach the tape surrounding the room portion as compared to the conventional insulating portion.

That is, the present disclosure can provide the battery pack 100 capable of dispersing a drop impact by interposing the insulating portion 130 including the insulating sheet 131 made of a PC material between the room portion 116A and the terrace portion 118, and the protection circuit module 120. In addition, the present disclosure can provide the battery pack 100 capable of reducing the thickness by slimming down the insulating portion 130.

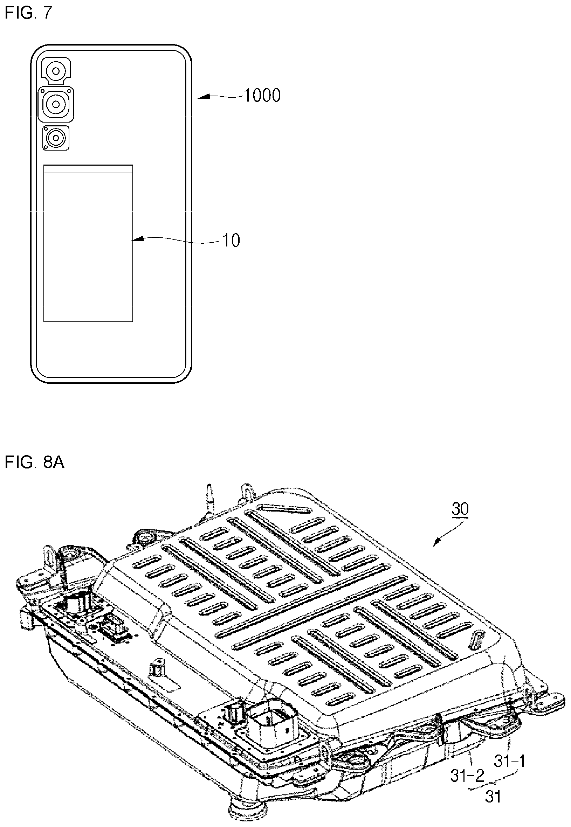

FIG. 7 is a schematic view briefly illustrating a smartphone equipped with a secondary battery according to some embodiments of the present disclosure. As shown in FIG. 7, a secondary battery 10 according to some embodiments of the present disclosure may be a small battery mounted on a small portable device such as a smartphone 1000. In this case, because the example secondary battery 10 has a structure capable of relatively increasing the capacity of the secondary battery 10 while slimming down an internal structure thereof, the secondary battery 10 may be a battery suitable for application in a small portable device. Meanwhile, in the present specification, the terms "secondary battery" and "battery" have the same meaning, and described differently for convenience of description.

In addition, the secondary battery according to the above-described embodiments can be used to manufacture a battery pack by relatively increasing the size thereof.

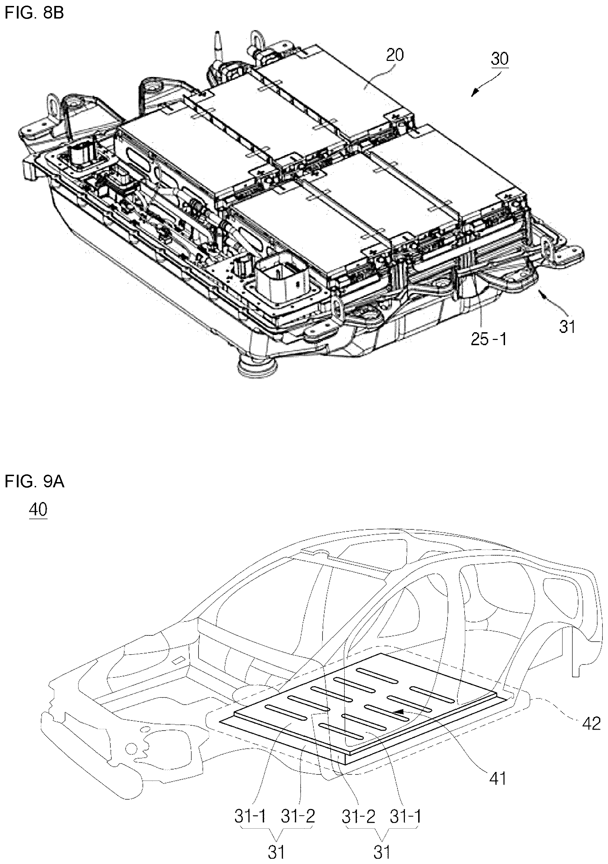

FIGS. 8A and 8B illustrate perspective views of an example of a battery pack 30.

The battery pack 30 may include a plurality of battery modules 20 and a housing 31 for accommodating the plurality of battery modules 20. For example, the housing 31 may include first and second housings 31-1 and 31-2 coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output.

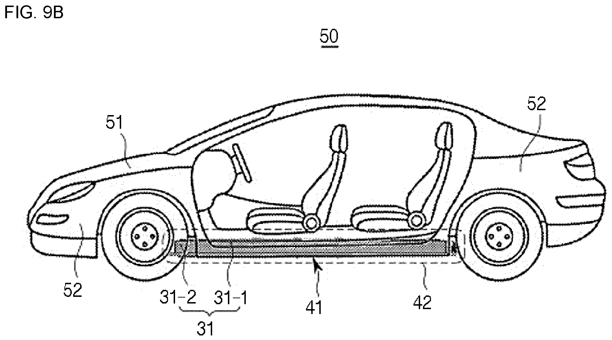

FIGS. 9A and 9B illustrate perspective and side views of examples of a vehicle body and a vehicle components 40.

In FIG. 9A, a battery pack 30 may include a battery pack cover 31-1, which is a part of a vehicle underbody 41, and a pack frame 31-2 located under the vehicle underbody 41. The pack frame 31-2 and the battery pack cover 31-1 may be integrally formed with a vehicle floor 42. The vehicle underbody 41 separates the inside and outside of a vehicle, and the pack frame 31-2 may be located outside the vehicle.

Referring to FIG. 9B, a vehicle 50 may be formed by combining additional parts, such as a hood 51 in front of the vehicle and fenders 52 respectively located in the front and rear of the vehicle to a vehicle body 40. The vehicle 50 may include the battery pack 30 that include the battery pack cover 31-1 and the pack frame 31-2, and the battery pack 30 may be coupled to the vehicle body 40.

According to the present disclosure, there is provided a battery pack capable of relatively increasing a size of a cell room and relatively increasing capacity by reducing a thickness of a tape applied to the cell room and a terrace, and being slimmed down overall by reducing a thickness of the tape on a protection circuit module side.

In addition, according to the present disclosure, provided is a battery pack capable of mitigating the risk of a short circuit of an electrode assembly by preventing a cell room from being pressed during a drop impact, regardless of the structure of the electrode assembly.

However, the aspects and features of the present disclosure are not limited to those described above, and other aspects and features not expressly described herein will be clearly understood by a person skilled in the art from the description of example embodiments of the present disclosure described below.

Although the present disclosure has been described with reference to embodiments and drawings illustrating aspects thereof, the present disclosure is not limited thereto. Various modifications and variations can be made by a person skilled in the art to which the present disclosure belongs within the scope of the technical of the present disclosure and the claims and their equivalents, below.

## Claims

1. A battery pack (30, 100) comprising:
a battery cell (110) including an electrode assembly (110A), and an exterior material (116) having a room portion (116A) accommodating the electrode assembly (110A) therein and a terrace portion (118) from which a positive electrode cell tab (115) and a negative electrode cell tab (114), which are electrically connected to the electrode assembly (110A), protrude;
a protection circuit module (120) electrically connected to the battery cell (110) and seated on the terrace portion (118); and
an insulating portion (130, 230, 330, 430) located between the protection circuit module (120) and the terrace portion (118) and located between the room portion (116A) and the protection circuit module (120).

2. The battery pack (30, 100) as claimed in claim 1, wherein the insulating portion (130, 230, 330, 430) includes:
a first region (130a, 140a, 230a, 330a, 430a) interposed between the protection circuit module and the terrace portion (118) and arranged in parallel with the terrace portion (118); and
a second region (130b, 140b, 230b, 330b, 430b) connected to the first region (130a, 140a, 230a, 330a, 430a) at an angle and interposed between the room portion (116A) and the protection circuit module.

3. The battery pack (30, 100) as claimed in claim 2, wherein the insulating portion (130, 230, 330, 430) includes:
an insulating sheet (131, 231, 331, 431) in each of the first region (130a, 140a, 230a, 330a, 430a) and the second region (130b, 140b, 230b, 330b, 430b), or in the second region (130b, 140b, 230b, 330b, 430b); and
an adhesive member (132, 432) on at least one surface of a first surface (A) of the insulating sheet and a second surface (B) facing the first surface (A) of the insulating sheet.

4. The battery pack (30, 100) as claimed in claim 3, wherein the insulating portion (130, 230, 330, 430) further includes a double-sided tape (133, 233, 333, 433) attached to at least one surface of the first surface (A) of the insulating sheet and the second surface (B) of the insulating sheet, and/or to one surface of the adhesive member (132, 432), to fix the insulating sheet (131, 231, 331, 431) and/or the adhesive member (132, 432).

5. The battery pack (30, 100) as claimed in claim 4, wherein the first region (130a, 140a, 230a, 330a, 430a) and the second region (130b, 140b, 230b, 330b, 430b) are at least partially connected to each other.

6. The battery pack (30, 100) as claimed in claim 5, wherein
the insulating sheet (131, 231, 331, 431) is in the second region (130b, 140b, 230b, 330b, 430b), and
the adhesive member (132, 432) is attached to the first surface (A) of the insulating sheet provided in the second region (130b, 140b, 230b, 330b, 430b), and extends to the first region (130a, 140a, 230a, 330a, 430a),and
the double-sided tape (133, 233, 333, 433) is attached to one surface of the adhesive member (132, 432) of the first region (130a, 140a, 230a, 330a, 430a) extending from the second region (130b, 140b, 230b, 330b, 430b).

7. The battery pack (30, 100) as claimed in claim 5, wherein
the insulating sheet (431) is divided into two separate insulating sheets (431) and provided in the first region (430a) and the second region (430b), respectively,
the adhesive member (432) is integrally bent and attached to the second surface (B) of each of the insulating sheet (431) of the first region (430a) and the insulating sheet (431) of the second region (430b), and
the double-sided tape (433) is divided into separate double-sided tapes (433) and attached to the first surfaces (A) of the insulating sheets (431), respectively, corresponding to each separated insulating sheet (431).

8. The battery pack (30, 100) as claimed in claim 5, wherein
the insulating sheet (231, 331) is in each of the first region (230a ,330a) and the second region (230b, 330b), and
the double-sided tape (233, 333) is attached to each of the first surface and the second surface of the insulating sheet (231, 331).

9. The battery pack (30, 100) as claimed in claim 8, wherein the insulating sheet (231) in the first region (230a) and the insulating sheet (231) in the second region (230b) are incised in a dot shape.

10. The battery pack (30, 100) as claimed in claim 9, wherein the double-sided tape (233) on the first surface of the insulating sheet (231) is incised to correspond to the dot shape of the insulating sheet (231).

11. The battery pack (30, 100) as claimed in claim 8, wherein a notch structure where at least one side is connected is formed between the insulating sheet (231, 331) in the first region (230a, 330a) and the insulating sheet (231, 331) in the second region (230b, 330b), and
the double-sided tape (333) on the first surface and the second surface of the insulating sheet (331) has a notch structure corresponding to the notch structure of the insulating sheet (331).

12. The battery pack (30, 100) as claimed in one of claims 2 to 11, wherein an outer side end of the insulating portion (130) in the second region (130b) is on a same line as or lower than an upper side of the room portion (116A).

13. The battery pack (30, 100) as claimed in one of the preceding claims, further comprising a protective member (140) surrounding one surface of the terrace portion (118) and at least one surface of the protection circuit module (120).

14. The battery pack (30, 100) as claimed in one of the preceding claims,
wherein the protection circuit module (120) further includes a connector (125) for electrically connecting the battery pack (30, 100) and an external device.

15. The battery pack (30, 100) as claimed in one of the preceding claims,
wherein the protection circuit module (120) is seated such that a charging and discharging protection device (124) mounted on the protection circuit module faces the terrace portion (118).
